# EUROPÄISCHE PATENTSCHRIFT

(11) **EP 1 936 365 B1**
(45) Veröffentlichungstag und Bekanntmachung des Hinweises auf die Patenterteilung: **05.03.2014**
(21) Anmeldenummer: 06127154.0
(22) Anmeldetag: 22.12.2006
(51) Int. Cl.: G01N 27/333, G01N 27/403

(54) **Verfahren zur Bestimmung einer Bezugselektrode auf einer ionenselektiven Festkontakt-Elektrode**
Method of determining a reference electrode on an ion-selective electrode having a solid contact
Procédé de détermination d'un électrode de rérérence sur un électrode sélective aux ions à contact solid

(43) Veröffentlichungstag der Anmeldung: 25.06.2008
(73) Patentinhaber: Metroglas AG, 8910 Affoltern a.A. (CH)
(72) Erfinder: Heule, Martin, 8903 Birmensdorf (CH); Pretsch, Ernö, 8707 Uetikon am See (CH); Vigassy, Tamas, 8046 Zürich (CH)
(74) Vertreter: Hepp Wenger Ryffel AG

(56) Entgegenhaltungen:
- EP-A- 0 302 228
- US-A- 5 271 820
- RUBINOVA ET AL: "Solid-contact potentiometric polymer membrane microelectrodes for the detection of silver ions at the femtomole level" SENSORS AND ACTUATORS B, ELSEVIER SEQUOIA S.A., LAUSANNE, CH, Bd. 121, Nr. 1, 16. November 2006 (2006-11-16), Seiten 135-141, XP005856176 ISSN: 0925-4005
- MALON ET AL.: "Potentiometry at Trace Levels in Confined Samples: Ion-Selective Electrodes with Subfemtomole Detection Limits" JOURNAL OF THE AMERICAN CHEMICAL SOCIETY, Bd. 128, 6. Juli 2006 (2006-07-06), Seiten 8154-8155, XP002478089
- MICHALSKA ET AL.: "An Experimental Study of Membrane Materials and Inner Contacting Layers for Ion-Selective K+ Electrodes with a Stable Response and Good Dynamic Range" ANALYTICAL CHEMISTRY, Bd. 76, 1. April 2004 (2004-04-01), Seiten 2031-2039, XP002478090
- BOBACKA J.: "Conducting Rolymer-Based Solid-State Ion-Selective Electrodes" ELECTROANALYSIS, Bd. 18, Nr. 1, Januar 2006 (2006-01), Seiten 7-18, XP002478091

## Beschreibung

Die Erfindung betrifft ein Verfahren zur Bestimmung einer Bezugselektrode auf einer ionenselektiven Festkontakt-Elektrode mit mindestens zwei ionenselektiven Messpunkten.

Polymer-Membran ionenselektive Elektroden (ISE) werden seit Jahrzehnten verwendet. Die Ionenselektivität solcher ISE wird durch die Wahl geeigneter Membrankomponenten bestimmt. Gewöhnlich umfassen diese selektive Ionenkomplexbildner (Ionophor) und ein lipophiles Gegenion, wie z.B. Phenylborate. Das resultierende ionenabhängige Potential gemäss der Nernst-Gleichung wird mittels Potentiometrie gemessen. Das Membranpolymer wird normalerweise aus einer Mischung aus Polyvinylchlorid und einem Weichmacher hergestellt. Bekannt sind auch Mischungen aus Methacrylatpolymeren, Silikonen oder Polyurethanen.

Die US 20030217920 beschreibt eine weichmacherfreie ISE mit einem Methacrylatcopolymer. Hinsichtlich der bekannten ISE und deren Herstellung wird auch Bezug genommen auf Analytica Chimica Acta 2001, 443, 25 (L.Y. Heng, E.A.H. Hall), dessen Inhalt hiermit in diese Anmeldung aufgenommen wird. Weitere Einzelheiten dazu werden auch in Ion-Sel. Electrode Rev. 1988, 10, 71 (G.J. Moody, B.B. Saad, J.D.R. Thomas) beschrieben.

Konventionelle ionenselektive Elektroden werden verwendet in Verbindung mit einer Silber/Silberchloridelektrode. In der Vergangenheit wurden grosse Anstrengungen getätigt, die hierbei nötige innere flüssige Ableitung durch Kontakte aus dünnen Festkörperschichten zu ersetzen. Die Vorteile liegen in einer vereinfachten Konstruktion, für deren Herstellung bekannte Beschichtungs- oder Dünnschichttechnologien oder Druckverfahren verwendet werden. Diese ermöglicht eine kostengünstige Produktion. Ebenso erlauben diese Techniken eine Miniaturisierung der ISE und die Herstellung von Einweg ISEs.

Die EP 1 480 038 A1 beschreibt eine mittels Siebdruck hergestellte ISE, mit einer inneren Elektrode aus einer Leiterpaste. Die Paste ist ein Gemisch aus einem wasserlöslichen Salz und einem Erdalkalimetall.

Die JP 2002 039990 beschreibt eine ionenselektive Elektrode mit einer Silberschicht, einer Silberhalogenschicht, einer Elektrolytschicht und einem ionenselektiven Film.

Es konnte gezeigt werden, dass Wasser durch eine ISE-Membran diffundieren und sich an der inneren Elektrode ablagern kann, was eine Verschiebung des gemessenen Potentials bewirkt. Ebenso sind die Verwendung hydrophober leitfähiger Polymere wie beispielsweise Poly-Thiophene oder Poly-Pyrrole als innere Elektroden bekannt. Diese können das Anlagern von Wasser verhindern und ein stabileres Verhalten der ISE bewirken (s. beispielsweise Elektroanalysis 18 (1), 2006, 7 bis 18, insbesondere 12, J. Bobacka).

T. Blaz et al. (s. Analyst, 130, 2005, 637 bis 643) schlagen die Verwendung von Referenzelektroden aus einem leitfähigen Polymer, welches mit einem pH-Puffer-System versehen ist, vor. Dieser Ansatz ist jedoch spezifisch für den Gebrauch einer Probenlösung innerhalb eines bestimmten pH-Bereichs und deshalb nicht für ein breites Anwendungsgebiet geeignet. Zudem setzen Interferenzen von redox-aktiven Substanzen die Anwendung solcher Elektroden in der Praxis Grenzen. Auch müssen diese Polymerfilme vor Gebrauch konditioniert werden.

Das Membranpotential muss gegenüber einer Referenzelektrode mit einem stabilen elektrochemischen Potential gemessen werden. Normalerweise erfolgt dies über eine Silber/Silberchloridelektrode. Jedoch ist die Verflachung und Miniaturisierung von haltbaren und einfach handzuhabenden Silber/Silberchlorid Referenzelektroden ein bisher ungelöstes Problem, welches eine breite Anwendung von Festkontakt ISE verhindert.

US 2001032785 beschreibt ein Verfahren zur Herstellung von flachen Referenzelektroden. Das Hauptproblem liegt hier darin, die Chloridaktivität an der Silber/Silberchloridschicht konstant zu halten. Kleine Reservoirs von Chlorid sind schnell erschöpft und führen zu einer Verschiebung des Referenzpotentials. Solche Referenzelektroden sind deshalb in ihrer Lebensdauer stark begrenzt und nur für eine limitierte Anzahl von Messungen geeignet. Zudem besteht das Problem, dass die Anschlüsse zu wenig dauerhaft sind, so dass Silberionen in Kontakt mit der Probenlösung treten. Dies kann zu unerwünschten Ausfällungen von Silberionen und Proteinen führen, welche in der Probenmatrix vorhanden sind. Auch dies führt zu einer Verschiebung des Referenzpotentials oder zu einer Blockierung des Diaphragmas. Diese Probleme werden bei den herkömmlichen Standardreferenzelektroden mit flüssigen Anschlüssen gelöst über poröse Keramikschichten oder eine feste Beschichtung der Anschlüsse.

Es gibt bereits sogenannte Titroden, welche aus einer pH-Glasmembran und einer Metallelektrode aufgebaut sind. Die pH-Glasmembran erfordert jedoch eine sorgfältige Schirmung, sodass eine Planarisierung und Miniaturisierung kaum realisierbar ist.

Das Dokument Sensors and Actuators B, 121 (2007) 135-141 offenbart die Bestimmung von lonenkonzentrationen mittels zweier unterschiedlicher, ionenselektiver Elektroden (ISE), wobei eine dieser ISE als Bezugselektrode ausgewählt wird.

Es ist deshalb eine Aufgabe der vorliegenden Erfindung, die Nachteile des Bekannten zu vermeiden, insbesondere ein Verfahren der eingangs genannten Art zu schaffen; die in diesem Verfahren verwendete Vorrichtung soll auf einfache Art und Weise herstellbar und flexibel einsetzbar sein. Insbesondere soll die Vorrichtung kostengünstig produziert und miniaturisiert werden können.

Erfindungsgemäss werden diese Aufgaben mit einem Verfahren zur Bestimmung einer Bezugselektrode mit den Merkmalen des unabhängigen Anspruchs 1 gelöst.

Das verwendete Set hat mindestens zwei ionenselektive Festkontakt-Elektroden. Diese umfassen jeweils wenigstens einen ionenselektiven Messpunkt. Mindestens zwei der Messpunkte sind gegenüber verschiedenen Ionen einer Analyselösung selektiv. Mit dieser Set-Anordnung kann in überraschend einfacher Art und Weise auf eine herkömmliche Referenzelektrode verzichtet werden, wenn die Aktivitiät eines Referenzions konstant oder vorhersehbar gehalten wird. Damit fallen auch die Nachteile der bekannten Referenzelektroden weg.

Im Rahmen dieser Anmeldung haben die verwendeten Begriffe, insbesondere ionenselektive Elektroden, die Bedeutung gemäss Definition in Joseph Wang, Analytical Electrochemistry, Wiley-VCH, New York, Third Ed., 2006.

Die ionenselektiven Festkontakt-Elektroden können, müssen jedoch nicht eine bauliche Einheit bilden. Es ist denkbar, eine Kollektion aus einer Vielzahl von einzelnen ionenselektiven Festkontakt-Elektroden jeweils auf einem eigenen Träger vorzusehen. Jede ionenselektive Festkontakt-Elektrode hat einen Messpunkt, welcher gegenüber einem Ion selektiv ist. Die Kollektion umfasst so beispielsweise eine Vielzahl von Elektroden, von denen jede gegenüber einem bestimmten Ion selektiv ist. In Abhängigkeit von dem zu analysierenden Ion können mindestens zwei Elektroden aus der Kollektion gewählt werden, um ein spezifisches Set für die betreffende Analyse zu bilden.

Bevorzugt umfassen die Messpunkte jeweils eine innere Schicht aus einem elektrisch leitfähigen Polymer und eine äussere ionenselektive Membran. Unter äussere Membran ist hier die Membran zu verstehen, welche bei bestimmungsgemässem Gebrauch direkt in Kontakt mit einer Analysenlösung bringbar ist. Unter innerer Schicht wird hier eine durch die äussere Membran von der Analysenlösung getrennte Schicht verstanden.

Besonders bevorzugt ist die äussere Membran Weichmacher frei.

Die Messpunkte können jeweils auf einem Metallleiter wie beispielsweise Gold aufgebracht sein. Die innere Schicht liegt so zwischen der Membran und dem Metallleiter. Die Metallleiter dienen dazu, die Potentiale von den Messpunkten an Messkontakte weiterzuleiten. Selbstverständlich müssen die Metallleiter mit einem Isolator gegenüber der Analysenlösung isoliert sein. In einer besonders vorteilhaften Ausführung liegen die Metallleiter mit den Messpunkten, welche jeweils gegenüber verschiedenen Ionen einer Analysenlösung selektiv sind auf einem gemeinsamen elektrisch nicht leitfähigen Träger, wie beispielsweise Keramik oder Polymerträger. Dadurch bildet das Set aus mindestens zwei ionenselektiven Festkontakt-Elektroden bevorzugt eine bauliche Einheit, was eine kompakte Bauweise ermöglicht. Bevorzugt weisst der Träger eine Vielzahl, insbesondere 2 bis 10, besonders bevorzugt 2 bis 4 Messpunkte auf, welche gegenüber verschiedenen Ionen selektiv sind. Ein solches Set auf einem gemeinsamen Träger ist universell für die Analyse verschiedenster Lösungen einsetzbar, was die Laboranwendung stark vereinfacht und die Gefahr von Verwechslungen bei der Wahl der Elektroden vermindert.

Die Verwendung eines Metallleiters ist nicht zwingend notwendig, stattdessen kann auch die innere Schicht die Funktion des Metallleiters übernehmen.

Mit einem Set aus mindestens zwei ionenselektiven Festkontakt-Elektroden können die Probleme einer flüssigen inneren Ableitung vermieden werden. Es ist also kein separates Referenzelektrolyt in einer Referenzelektrode notwendig. Bevorzugt weist jeder Messpunkt den prinzipiell gleichen Aufbau mit denselben Komponenten auf, und mindestens zwei äussere Membranen unterscheiden sich nur durch verschiedene ionenselektive Zusätze, insbesondere durch unterschiedliche Ionophoren und/oder unterschiedliche Ionentauschersalze. In der erfindungsgemässen Elektrodenanordnung hat jeder Messpunkt praktisch den gleichen elektrischen Widerstand. Dadurch hat sie einen elektrisch symmetrischen Aufbau. Durch die Verwendung von dünnen Schichten liegt der elektrische Widerstand vergleichsweise tief, typisch bei 1 - 10 MOhm, was eine Abschirmung der Messpunkte erübrigt.

Ein weiterer Vorteil des erfindungsgemässen Verfahrens liegt darin, dass keine Referenzelektrode, insbesondere keine Ag/AgCl Referenzelektrode mit einem Referenzelektrolyten notwendig ist. Mit dem erfindungsgemässen Elektrodenset muss vor einer Messung nicht bestimmt werden, welcher Messpunkt der Indikator und welcher Messpunkt das Bezugspotential liefert. Diese Wahl wird bevorzugt durch die Analyse der chemischen Zusammensetzung der Analysenlösung und deren Additive, welche für das Analyseverfahren verwendet werden, getroffen.

Die Anordnung mit mehreren Messpunkten ist besonders vorteilhaft, da die Messpunkte einfach auf eine Vielzahl von Ionen-Analyseanwendungen angepasst werden können, wie z.B. Titration oder Standard-Addition. Es befindet sich ein Ion, welches nicht das zu untersuchende Indikator Ion ist, entweder bereits in der Analysenlösung oder dieses wird vor oder während der Messung der Analysenlösung zugegeben. Die Aktivität dieses Ions kann dann als Bezugsaktivität während der ganzen quantitativen Bestimmung verwendet werden.

Bevorzugt haben zwei oder mehr Messpunkte eines Sets die gleiche Ionenselektivität. In diesem Fall muss das Set mindestens einen weiteren, jedoch unterschiedlich ionenselektiven Messpunkt aufweisen. Diese Redundanz kann die Genauigkeit und Zuverlässigkeit der Messung erhöhen und ermöglicht eine verbesserte Qualitätssicherung.

Für standardisierte Laboranalysen sind Einweg-Sensoren zu teuer und deren ständiger Austausch nach jeder Messung ist zu aufwändig, da bisher noch keine automatischen Wechselvorrichtungen für den Austausch erhältlich sind. Das im erfindungsgemässen Verfahren verwendete Elektrodenset hat eine viel längere Lebensdauer als herkömmliche Einweg-Sensoren. Deshalb kann es für mehrere Messzyklen verwendet werden, bevor es ausgetauscht werden muss. Zudem fällt bei der Erfindung der Nachteil einer rasch instabil werdenden Referenzelektrode weg.

Wegen der hohen Preise für Standard ISE werden diese gewöhnlich solange verwendet, bis sich deren Ansprechverhalten, insbesondere deren Steilheit, signifikant verschlechtert. Diese Verschlechterung kann ein derartiges Ausmass annehmen, dass die mit einer solchen übernutzten Elektrode erhaltenen quantitativen Resultate unzuverlässig sind. Das verwendete Elektrodenset kann öfter als herkömmliche ISE ausgetauscht werden, hat aber trotzdem eine gegenüber Einwegsensoren viel längere Lebensdauer, so dass dieses viel später als Einwegsensoren ausgetauscht werden muss. Ein typischer Lebenszyklus eines verwendeten Elektrodesets beträgt vorzugsweise bis zu einige 100 Analysendurchgänge bei konstanter Qualität der Messresultate.

Die innere Schicht eines Messpunkts umfasst bevorzugt ein hydrophobes Polymer, insbesondere ein Poly(n-octyl)thiophen (POT), Polydodecyltiohpen (PDT), Poly(2,2'-bithiphene), oder Poly(3,4-ethylendioxythiophen) (PEDOT). Diese Polymere bilden einen besonders stabilen Übergang zum Metallleiter.

Die ionenselektive Membran umfasst bevorzugt ein Polyvinylchlorid (PVC), ein Acrylatpolymer oder ein Methacrylatpolymer (MA) der andere Polymere, welche ein Ionentauschersalz und/oder ein Ionophor enthalten.

Bevorzugt ist einer der Messpunkte als Bezugssensor mit einem Messeingang eines Potentiometers verbunden oder verbindbar. Bevorzugt erfolgt die Verbindung über einen Kontakt an einem freien Ende des Metallleiters. Mindestens ein weiterer Messpunkt liefert das Indikatorsignal über einen anderen Kontakt.

In einem weiteren Aspekt umfasst das Elektrodenset eine Membran, welche eine über kovalente Bindungen quervernetze und/oder weichmacherfreie Struktur aufweist.

Bevorzugt ist diese Struktur durch eingebundene difunktionelle (Meth)acrylat Monomere quervernetzt.

Vorzugsweise sind die äusseren Membranen aus einer Mischung aus einem Methacrylat, bevorzugt 2-Ethylhexyl-methacrylat; einem Dimethacrylat, bevorzugt 1,6-Hexanediol-dimethacrylat; einem Radikalstarter wie beispielsweise 2,2'-Azobis-(2-methyl-butyronitril) (AIBN) und einer Ionen spezifischen Komponente erhältlich. Der Anteil des 1,6-Hexanediol-dimethacrylat beträgt vorzugsweise ca. 0.1 bis 5.0 Gew.% und der Anteil des AIBN ca. 0.1 bis 5.0 Gew.%.

Diese Zusammensetzungen sind besonders vorteilhaft, weil für alle Messpunkte die jeweils gleichen Grundmischungen für äussere Membran und innere Schicht verwendet werden können. Einzig die Ionen spezifische Komponente in der Membran variiert bei mindestens zwei Messpunkten. Dieser symmetrische Aufbau zwischen zwei Messpunkten ermöglicht eine wirtschaftliche Produktion von massgeschneiderten Membranen bzw. Elektroden unter Verwendung derselben Reaktionsmischungen für die Membranen und der Produktionswerkzeuge. Basierend auf den Bedürfnissen der Anwender kann ein applikationsspezifisches Produktionsverfahren implementiert werden.

Ein anderer Aspekt betrifft ein Verfahren zur Herstellung eines Sets aus mindestens zwei ionenselektiven Festkontakt-Elektroden. Dazu werden auf einen Träger beispielsweise aus Keramik mindestens zwei innere Schichten aus einem elektrisch leitfähigen Polymer bevorzugt POT, PDT oder PEDOT aufgebracht. Dafür ist zum Beispiel das Tintenstrahldruckverfahren besonders geeignet. Alternativ kann die innere Schicht direkt an der Elektrode durch Elektropolymerisation von Thiophen-monomeren erzeugt werden. Einige typische Prozeduren sind in J.D. Guo, S. Amemiya, Anal. Chem., 2006, 78 (19), 6893-6902 beschrieben. Alternativ kann zwischen den inneren Schichten und dem Träger jeweils ein Metallleiter aufgebracht werden. Die Metallleiter werden bevorzugt auf den Träger gedruckt. Auf die inneren Schichten wird dann jeweils eine ionenselektive Membran aufgedruckt. Ein dafür besonders geeignetes Verfahren bildet der Tintenstrahldruck. Dieses Verfahren eignet sich besonders zur Herstellung eines Elektrodensets mit mindestens zwei Messpunkten, welche gegenüber verschiedenen Ionen selektiv sind.

Dieses Verfahren ist deshalb besonders vorteilhaft, weil keine Referenzelektrode in einem separaten und grundsätzlich anderen Herstellungsverfahren wie bei herkömmlichen Elektroden gefertigt werden muss. Insbesondere entfällt die Beschichtung eines Substrats mit Silber/Silberchlorid.

Die Schichten können nach dem Aufbringen beispielsweise durch Erhitzen ausgehärtet werden. Alternativ oder ergänzend ist auch bei entsprechend gewählter chemischer Zusammensetzung die Photopolymerisation dafür geeignet.

Vorzugsweise werden die Schichten und/oder die ionenselektive Membranen in situ polymerisiert; es werden also die Reaktanten für die Erzeugung des Polymers aufgedruckt und erst auf dem Träger zur Reaktion gebracht. Alternativ kann die innere Schicht in-situ durch Elektropolymerisation aufgebaut werden. Dies ermöglicht die Anwendung von Druck- oder Pipettierverfahren und vereinfacht den Herstellungsprozess.

Ein weiterer Aspekt umfasst ein Verfahren zur Messung der Ionenaktivität in einer Analysenlösung. Dazu wird ein Set mit mindestens zwei ionenselektiven Festkontakt-Elektroden mit mindestens zwei Messpunkten, welche jeweils gegenüber verschiedenen Ionen einer Analysenlösung selektiv sind, in die Analysenlösung eingetaucht. Anschliessend werden die Potentiale zwischen zwei verschiedenen Messpunkten gemessen und ausgewertet. Die beiden Messpunkte sind gegenüber unterschiedlichen Ionen nen selektiv. Bevorzugt wird dazu ein Set mit ionenselektiven Festkontakt-Elektroden gemäss einer oben beschriebenen Ausführungsformen verwendet.

Bevorzugt wird für dieses Vefahren ein Set von zwei ionenselektive Festkontakt-Elektroden verwendet, deren Messpunkte sich nur durch verschiedene Ionophore und/oder Ionenaustauschersalze in deren äusseren Membranen unterscheiden. Dies ermöglicht eine einfache, kostengünstige Herstellung und erlaubt eine elektrisch symmetrische Setanordnung.

Bevorzugt findet die Analyse der Ionenaktivität mit dem beschriebenen Elektrodenset in Standard-Additionsverfahren oder bei der Titration Verwendung.

Bevorzugt wird das Verfahren zur Analyse der Ionenaktivität zur Bestimmung des Equivalenzpunkts der Titration verwendet. Der Equivalenzpunkt kann beispielsweise durch eine Registrierung einer plötzlichen Änderung des Potentials zwischen zwei Messpunkten bestimmt werden. Der Vorteil liegt darin, dass nicht zwingend eine s-förmige Titrationskurve vorliegen muss. Ein Peak oder eine Änderung in der Kurvensteigung genügen für die Bestimmung des Equivalenzpunktes. Ein Anwendungsbeispiel bildet die Bestimmung der Wasserhärte.

Bei der Titration ist das andere Ion, welches nicht das zu analysierende ist, bevorzugt entweder bereits in der Analysenlösung vorhanden oder eine Lösung mit einer geeigneten Ionenzusammensetzung wird vor der Titration der Analysenlösung beigemischt. Ein Messpunkt ist also selektiv gegenüber dem zu analysierenden Ion, ein anderer Messpunkt reagiert selektiv auf ein Ion, dessen Aktivität während der Titration konstant bleibt oder dessen Änderungen der Aktivität während der Titration vorhersagbar sind.

Jedenfalls zeigt die Potentialdifferenz zwischen den beiden Messpunkten beim Equivalenzpunkt eine unterscheidbare Veränderung, so dass der Equivalenzpunkt mit einem geeigneten Algorithmus aus der potentiometrischen Messung bestimmt werden kann.

Ein Aspekt umfasst ausserdem ein Verfahren zur Bestimmung einer Bezugselektrode in einer vorgegebenen potentiometrischen Analyse einer geeigneten Analysenlösung. Dazu wird die chemische Zusammensetzung der zu analysierenden Probe herangezogen: es wird ein Ion definiert, welches in der Probe vorhanden ist oder der Probe vor der Analyse zugegeben wird und dessen Aktivität sich während der Analyse nicht oder in vorhersehbarer Weise ändert. Dann wird eine ionenselektive Elektrode bzw. ein Messpunkt eines Elektrodensets ausgewählt, welche gegen das definierte Ion selektiv ist. Diese Elektrode bzw. der Messpunkt wird dann als Bezugselektrode verwendet für die Analyse. Somit bestimmt also nicht in herkömmlicher Weise der Sensor, was als Bezugselektrode genommen wird, sondern die Zusammensetzung der Probe bestimmt die Wahl der Bezugselektrode. Bevorzugt wird für dieses Verfahren ein erfindungsgemässes Elektrodenset verwendet.

In einem weiteren Aspekt ist das verwendete Elektrodenset in einem Laborgerät eingebaut. Eine der ionenselektiven Festkontakt-Elektroden ist dabei als Referenzelektrode vorgesehen. Eine ionenselektive Festkontakt-Elektrode kann auch ausserhalb eines Laborgeräts als Referenzelektrode in einem Analyseverfahren wie beispielsweise der Titration oder der Standard-Addition verwendet werden.

Völlig überraschend hat sich zudem gezeigt, dass sich eine bevorzugt weichmacherfreie ionenselektive Festkontakt-Elektrode mit Hitze und insbesondere unter Druck sterilisieren lässt, ohne die äussere Membran bzw. innere Schicht und damit ihre Funktion zu beeinträchtigen. Dazu kann die Elektrode bzw. ein Elektrodenset in einem üblichen Autoklaven sterilisiert werden. Bevorzugt werden die Elektroden im Autoklaven während mindestens 30 Minuten bei einer Mindesttemperatur von 100 °C und einem minimalen Druck von 1-2 bar sterilisiert Durch dieses erfindungsgemässe Verfahren können also die ionenselektiven Festkontakt-Elektroden jeweils auf einfache Art und Weise vor einer Analyse sterilisiert werden, ohne deren Funktion zu beeinträchtigen. Dies ermöglicht den mehrmaligen Einsatz der Elektroden, was die Kosten von Analysen senkt.

Weitere Einzelmerkmale und Vorteile der Erfindung ergeben sich aus der nachfolgenden Beschreibung der Ausführungsbeispiele und aus den Zeichnungen. Es zeigen:
- Figur 1A:: Eine Wasserhärtetitration unter Verwendung einer Ca²⁺-ISE, referenziert mit einer Standard-Silber/Silberchlorid-Referenzelektrode,
- Figur 1B:: eine Wasserhärtetitration unter Verwendung einer Ca²⁺ ISE und einer H⁺-ISE als Referenzelektrode,
- Figur 1C:: eine Wasserhärtetitration mit einer Ca²⁺-ISE, welche gegenüber einer Na⁺-ISE referenziert ist,
- Figur 2:: einen Querschnitt eines ersten Beispiels eines Elektrodensets längs der Schnittebene A-A gemäss Fig. 3,
- Figur 3:: eine Ansicht eines ersten Beispiels eines Elektrodensets,
- Figur 4:: eine Ansicht eines zweiten Beispiels eines Elektrodensets,
- Figur 5:: eine Ansicht eines dritten Beispiels eines Elektrodensets,
- Figur 6:: eine Ansicht eines vierten Beispiels eines erfindungsgemässen Elektrodensets.

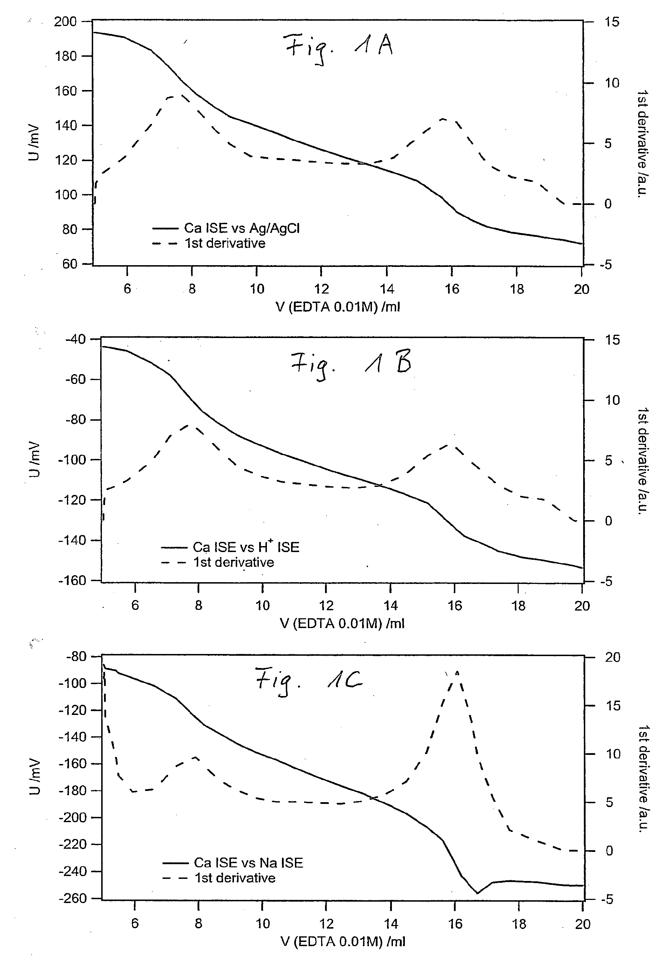

Die Figuren 1A bis 1C zeigen die vielseitige Verwendbarkeit der Vorrichtung zur Bestimmung der Wasserhärte durch die Bestimmung der Ca²⁺- und Mg²⁺-Ionen durch komplexometrische Titration in einer Wasserprobe. Als Titrant (Komplexbildner) wurde Ethylendiamintetraacetat (EDTA) verwendet. Einer Wasserprobe von 150 ml wurden 15 ml einer TRIS/Acetylacetonat Pufferlösung vor der Titration hinzugegeben. Dieser Puffer verhindert Wechselwirkungen von dreiwertigen Kationen und stabilisiert den pH-Wert, um eine konstante Komplexbildungsrate von Ca²⁺ und Mg²⁺ mit EDTA zu erhalten. Deshalb ist der pH-Wert als Bezugspotential geeignet, welches mit einer pH-ISE abgegriffen wird. In Figur 1A wird die Wasserhärte über eine Ca²⁺-ISE mit einer Standard-Ag/AgCl-Elektrode referenziert. Das gleiche Titrationsresultat wird erhalten mit einer Ca²⁺-ISE, referenziert mit einer H⁺-ISE (Fig. 1B) oder mit einer Na⁺-ISE (Figur 1C), ohne die Titrationschemie zu verändern. Lediglich die Absolutwerte des Potentials (Ordinate) variieren dabei in Abhängigkeit der verwendeten Elektroden und es musste keine Zugabe eines weitern Ions erfolgen.

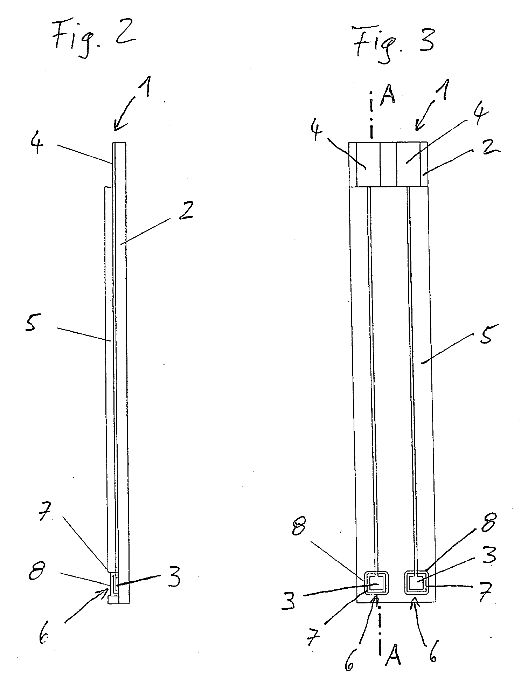

Figur 2 zeigt ein Set (1) aus ionenselektiven Festkontaktelektroden im Querschnitt entlang der Schnittebene A-A in Fig. 3. Auf einem Träger 2 aus Keramik sind mittels Siebdruckverfahren zwei Metallleiter 3 aus Gold aufgebracht. Diese liegen parallel zueinander und weisen an einem Ende einen verbreiterten Kontaktabschnitt 4 zum Abgreifen des Potentials auf. Am anderen Ende des Leiters 3 befindet sich jeweils ebenfalls ein verbreiteter Abschnitt. Der Träger 2 und die beiden Leiter 3 sind mit einer Isolationsschicht 5 aus einem nicht leitenden Material versehen. Auf den Kontaktabschnitt 4 und dem entgegen gesetzten verbreiterten Abschnitt des Leiters 3, welcher zu einem Messpunkt 6 gehört, fehlt die Isolationsschicht 5. Der Leiter 3 ist an den Messpunkten 6 mit einer elektrisch leitfähigen Schicht 7 aus Polymer versehen. Es handelt sich um ein Poly-3-octyltiophen. Das Polymer der Schicht 7 kann, beispielsweise aus einer Lösung mittels dem Tropfgussverfahren oder dem Tintenstrahldruck auf den Messpunkt 6 aufgebracht werden; denkbar ist aber auch die elektrochemische Beschichtung. Optional wird dieses Polymer mit einer Temperatur zwischen 40° C und 180° C ausgehärtet.

Die innere Schicht 7 wird vollständig von einer ionenselektiven Membran 8 überdeckt. Die Membran 8 ist ein Gemisch aus einem 2-Ethylhexyl-methacrylat, 0.1 bis 5.0 Gew.% 1,6-Hexanediol-dimethacrylat und 1.0 Gew.% 2,2'-Azobis(2-methylpropionitril). Dieses Gemisch bildet ein kreuzvernetztes Methacrylatpolymer und formt eine Membranmatrix, in welcher die Ionen spezifischen Komponenten gelöst werden. Beispielsweise umfassen die Ionen spezifischen Komponenten für eine Ca²⁺- ISE 1.2 Gew. % Calcium Ionophor IV (ETH 5234, N,N-Dicyclohexyl-N',N'-Dioctadecyl-3-oxapentanamid) und 0.4 Gew. % Natrium-tetrakis(3,5-bis(trifluoromethyl)phenyl)borat. Diese Komponenten werden dem Basismembrangemisch (siehe oben) zugefügt. Für anders selektive Membranen werden dem Basismembrangemisch andere Ionophoremoleküle bzw. Ionenaustauschersalze beigemischt, in Abhängigkeit der gewünschten Ionenselektivität. Die Zusammensetzung und deren Mischverhältnis sind dem Fachmann bekannt und/oder können leicht in Routineversuchen ermittelt werden.

Eine geringe Menge dieses Ionen-spezifischen Membrangemisches 8 wird flächendeckend auf die elektrische leitfähige Schicht 7 aufgebracht. Dadurch kann keine Analysenlösung mit der Schicht 7 in Kontakt gelangen. Der Membranherstellung erfolgt entweder durch das Tintenstahldruckverfahren oder durch andere Pipetierverfahren; hierbei wird ein sogenannter Membrancocktail aufgebracht, welcher zur Membran nach dem Auftrag aushärtet. Die Dicke der Membran 8 wird kontrolliert über das aufgetragene Volumen des Membrangemisches 8 auf den Messpunkt. Typischerweise beträgt das Volumen 0,2 bis 4 Mikroliter pro Messpunkt.

Sobald das Membrangemisch auf den Messpunkt 6 aufgebracht ist, wird die Gelpolymerisation gestartet durch Aktivierung des AIBN Radikalstarters. Andere Radikalstarter wie Benzoinmethylether können verwendet werden, um die für die Polymerisation erforderliche UV-Lichtleistung gezielt reduzieren zu können. Die Aktivierung erfolgt über Wärme und/oder Licht. Für jeden Messpunkt 6 wird ein anderes Methacrylatmembrangemisch 8 aufgetragen, wobei jeweils die gleichen Tintenstahldruckverfahren oder Pipetierverfahren verwendet werden können.

Figur 3 zeigt eine Ansicht eines Sets 1 mit zwei Messpunkten 6. Der Träger 2 ist mit zwei parallelen Goldleitern 3 bedruckt. Diese weisen am Ende jeweils einen Kontaktabschnitt 4 auf. Dieser dient zum Abgreifen des Potentials von den Messpunkten 6 am anderen Ende des Leiters 3. Jeder Messpunkt 6 umfasst jeweils eine innere Schicht 7 aus einem leitfähigen Polymer, welche jeweils auf einem Leiter 3 aufliegt. Die innere Schicht 7 ist jeweils überdeckt mit einer ionenselektiven Membran 8, wobei die ionenselektiven Membranen 8 gegenüber unterschiedliche ionenselektiv ausgebildet sind.

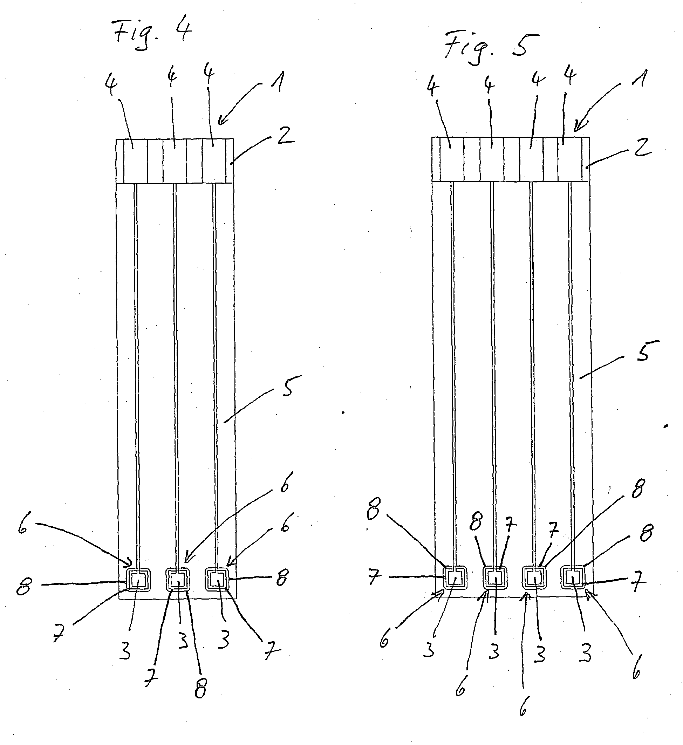

Die in den Figuren 4 und 5 gezeigten Beispiele sind analog aufgebaut wie die in den Figuren 2 und 3 dargestellten Sets 1 mit ionenselektiven Festkontakt Elektroden. Das in Figur 4 dargestellte Set 1 weist jedoch drei Messpunkte 6 auf. Das in Figur 5 gezeigte Set 1 hat vier Messpunkte 6. Damit ein Messpunkt 6 als Referenz verwendet werden kann, sind jeweils mindestens zwei der vier (Figur 5) bzw. 3 (Figur 4) Messpunkte 6 gegenüber verschiedenen Ionen selektiv.

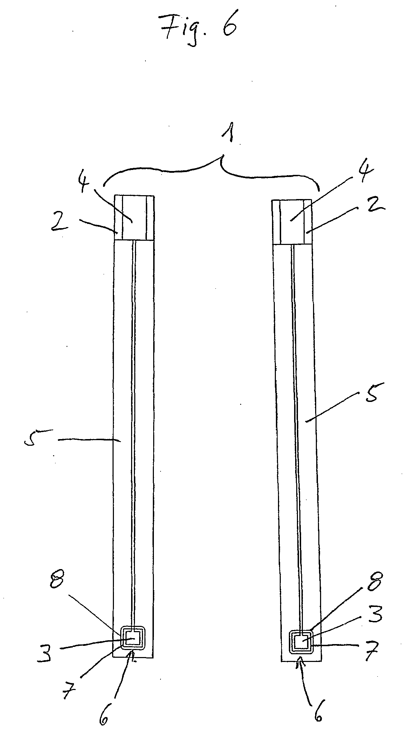

Das Beispiel eines Elektrodensets 1 in Figur 6 ist vergleichbar mit dem in den Figuren 2 und 3 gezeigten Beispiel. Jedoch sind in Fig. 6 die Messpunkte 6 auf getrennten Trägern 2 angeordnet. Die beiden Messpunkte 6 dieses Elektrodensets 1 unterscheiden sich durch eine unterschiedliche Ionenselektivität. Welcher der beiden Messpunkte 6 als Referenz dient, ist nicht a priori durch das Elektrodenset bestimmt, sondern ergibt sich aufgrund der Analysenlösung. Grundsätzlich sind beide Messpunkte als Bezugselektrode bzw. als Indikatorelektrode verwendbar.

## Patentansprüche

1. Verfahren zur Bestimmung einer Bezugselektrode auf einer ionenselektiven Festkontakt-Elektrode mit mindestens zwei ionenselektiven Messpunkten, in einer potentiometrischen Analyse einer vorbestimmten Analysenlösung umfassend die Schritte
- Definieren eines Ions der Analysenlösung, dessen Aktivität sich während der Analyse nicht oder in vorhersehbarer Weise ändert,
- Festlegung eines ionenselektiven Messpunktes, welcher gegen das definierte Ion selektiv ist, als Bezugselektrode.

2. Verfahren nach Anspruch 1, **dadurch gekennzeichnet, dass** mindestens zwei Messpunkte (6) jeweils folgende Komponenten umfassen, bevorzugt jeweils aus folgenden Komponenten bestehen:
- eine innere Schicht (7) aus einem elektrisch leitfähigen Polymer;
- eine äussere ionenselektive Membran (8).

3. Verfahren nach Anspruch 1 oder 2, **dadurch gekennzeichnet, dass** mindestens zwei Messpunkte (6) jeweils auf einem Metalleiter (3) aufgebracht sind und/oder auf einem gemeinsamen elektrisch isolierenden Träger (2) befestigt oder befestigbar sind.

4. Verfahren nach einem der Ansprüche 2 oder 3, **dadurch gekennzeichnet, dass** die innere Schicht (7) jeweils ein hydrophobes Polymer umfasst, insbesondere aus der Gruppe der Polythiophene, der Polyaniline oder der Polypyrrole.

5. Verfahren nach einem der Ansprüche 2 bis 4, **dadurch gekennzeichnet, dass** die Membrane (8) eine Substanz umfasst, ausgewählt aus der Gruppe bestehend aus Polyvinylchlorid (PVC), (Meth)acrylatpolymer (MA), anderen Polymeren, enthaltend ein Ionentauschersalz und/oder ein Ionophor.

6. Verfahren nach einem der Ansprüche 1 bis 5, **dadurch gekennzeichnet, dass** zwei beliebige Messpunkte (6) mit einem Messeingang eines Potentiometers verbunden oder verbindbar sind.

7. Verfahren nach einem der Ansprüche 2 bis 6, **dadurch gekennzeichnet, dass** die Membran (8) eine über kovalente Bindungen quervernetze und/oder weichmacherfreie Struktur umfasst.

8. Verfahren nach Anspruch 7, **dadurch gekennzeichnet, dass** die Struktur durch eingebundene difunktionelle (Meth)acrylat Monomere quervernetzt ist.

9. Verfahren nach einem der Ansprüche 2 bis 6, **dadurch gekennzeichnet, dass** eine Membran (8) erhältlich ist durch Reaktion der Komponenten Mono(meth)acrylat, Di(meth)acrylat, Radikalstarter und die für eine ionenselektive Elektrode notwendigen Komponenten enthält.

10. Verfahren nach Anspruch 9, **dadurch gekennzeichnet, dass** die Reaktionsmischung aus 2-Ethyl-hexyl-methacrylat (EHMA), ca. 0.1 bis 5.0 Gew.-% 1,6-Hexandiol-dimethacrylat und ca. 0.1 bis 5.0 Gew.-% Radikalstarter umfasst.

11. Verfahren gemäss einem der Ansprüche 1 bis 10, umfassend die Schritte
- Eintauchen eines Sets (1) mit mindestens zwei ionenselektiven Festkontakt-Elektroden mit mindestens zwei Messpunkten (6), welche jeweils gegenüber verschiedene Ionen der Lösung selektiv sind, in eine Analysenlösung,
- Messung der Potentiale zwischen mindestens zwei gegenüber verschiedenen Ionen selektiven Messpunkten (6),
- Auswertung der Potentialmessung.

12. Verfahren nach Anspruch 11, **dadurch gekennzeichnet, dass** sich die chemische Zusammensetzung von mindestens zwei Messpunkten (6) nur durch ein unterschiedliches Ionophor und/oder ein unterschiedliches Ionenaustauschersalz in einer ionenselektiven äusseren Membran (8) unterscheiden.

13. Verfahren nach Anspruch 11 oder 12, **dadurch gekennzeichnet, dass** es sich um ein Titrations- oder Standard-Additionsverfahren handelt.

14. Verfahren nach einem der Ansprüche 11 bis 13, **dadurch gekennzeichnet, dass** ein Equivalenzpunkt der Titration bestimmt wird durch eine Registrierung einer Änderung des Potentials zwischen zwei Messpunkten (6).

## Claims

1. Process for the determination of a reference electrode on an ion-selective fixed-contact electrode with at least two ion-selective measuring points, in a potentiometric analysis of a predetermined analysis solution, comprising the steps
- defining an ion of the analysis solution, the activity of which does not change or changes in a predictable manner during the analysis,
- establishing an ion-selective measuring point, which is selective with respect to the defined ion, as the reference electrode.

2. Process according to Claim 1, **characterized in that** at least two measuring points (6) comprise in each case the following components, preferably in each case consisting of the following components:
- an inner layer (7) of an electrically conductive polymer;
- an outer ion-selective membrane (8).

3. Process according to Claim 1 or 2, **characterized in that** at least two measuring points (6) are applied in each case to a metal conductor (3) and/or are fastened or can be fastened to a common electrically insulating support (2).

4. Process according to either of Claims 2 and 3, **characterized in that** the inner layer (7) comprises in each case a hydrophobic polymer, in particular from the group consisting of the polythiophenes, the polyanilines or the polypyrroles.

5. Process according to any of Claims 2 to 4, **characterized in that** the membrane (8) comprises a substance selected from the group consisting of polyvinyl chloride (PVC), (meth)acrylate polymer (MA), other polymers containing an ion exchange salt and/or an ionophor.

6. Process according to any of Claims 1 to 5, **characterized in that** two arbitrary measuring points (6) are connected or can be connected to a measuring input of a potentiometer.

7. Process according to any of Claims 2 to 6, **characterized in that** the membrane (8) comprises a structure which is crosslinked via covalent bonds and/or is plasticizer-free.

8. Process according to Claim 7, **characterized in that** the structure is crosslinked by incorporated difunctional (meth)acrylate monomers.

9. Process according to any of Claims 2 to 6, **characterized in that** a membrane (8) is obtainable by reaction of the components mono(meth)acrylate, di(meth)acrylate and free radical initiator and contains the components required for an ion-selective electrode.

10. Process according to Claim 9, **characterized in that** the reaction mixture comprises 2-ethylhexyl methacrylate (EHMA), about 0.1 to 5.0% by weight of 1,6-hexandiol dimethacrylate and about 0.1 to 5.0% by weight of free radical initiator.

11. Process according to any of Claims 1 to 10, comprising the steps
- immersion of a set (1) comprising at least two ion-selective fixed-contact electrodes with at least two measuring points (6), which in each case are selective with respect to different ions of the solution, in an analysis solution,
- measurement of the potentials between at least two measuring points (6) selective with respect to different ions,
- evaluation of the potential measurement.

12. Process according to Claim 11, **characterized in that** the chemical compositions of at least two measuring points (6) differ only through a different ionophor and/or a different ion exchange salt in an ion-selective outer membrane (8).

13. Process according to Claim 11 or 12, **characterized in that** it is a titration or standard addition process.

14. Process according to any of Claims 11 to 13, **characterized in that** an equivalence point of the titration is determined by registering a change in the potential between two measuring points (6).

## Revendications

1. Procédé de détermination d'une électrode de référence sur une électrode de contact fixe à sélectivité ionique comprenant au moins deux points de mesure à sélectivité ionique dans une analyse potentiométrique d'une solution d'analyse prédéfinie, comprenant les étapes suivantes
- définition d'un ion de la solution d'analyse dont l'activité ne varie pas ou varie de manière prévisible pendant l'analyse,
- définition d'un point de mesure à sélectivité ionique, qui est sélectif à l'encontre de l'ion défini, en tant qu'électrode de référence.

2. Procédé selon la revendication 1, **caractérisé en ce qu'**au moins deux points de mesure (6) comprennent respectivement les composants suivants, de préférence se composent respectivement des composants suivantes :
- une couche intérieure (7) en un polymère électriquement conducteur ;
- une membrane (8) extérieure à sélectivité ionique.

3. Procédé selon la revendication 1 ou 2, **caractérisé en ce qu'**au moins deux points de mesure (6) sont respectivement montés sur un conducteur métallique (3) et/ou sont fixés ou peuvent être fixés sur un support (2) électriquement isolant commun.

4. Procédé selon l'une des revendications 2 ou 3, **caractérisé en ce que** la couche intérieure (7) comprend à chaque fois un polymère hydrophobe, notamment du groupe des polythiophènes, des polyanilines ou des polypyrroles.

5. Procédé selon l'une des revendications 2 à 4, **caractérisé en ce que** la membrane (8) comprend une substance choisie dans le groupe composé du polychlorure de vinyle (PVC), du polymère (méth)acrylate (MA), d'autres polymères, contenant un sel d'échange ionique et/ou un ionophore.

6. Procédé selon l'une des revendications 1 à 5, **caractérisé en ce que** deux points de mesure (6) quelconques sont reliés ou peuvent être reliés avec une entrée de mesure d'un potentiomètre.

7. Procédé selon l'une des revendications 2 à 6, **caractérisé en ce que** la membrane (8) comprend une structure réticulée transversalement par des liaisons covalentes et/ou exempte de plastifiant.

8. Procédé selon la revendication 7, **caractérisé en ce que** la structure est réticulée transversalement par des monomères (méth)acrylate difonctionnels incorporés.

9. Procédé selon l'une des revendications 2 à 6, **caractérisé en ce qu'**une membrane (8) peut être obtenue par réaction des composants mono(méth)acrylate, di(méth)acrylate, radical amorceur et contient les composants nécessaires pour une électrode à sélectivité ionique.

10. Procédé selon la revendication 9, **caractérisé en ce que** le mélange réactif comprend 2-éthyle-hexyleméthacrylate (EHMA), environ 0,1 à 5,0 % massiques de 1,6-hexanediol-diméthacrylate et environ 0,1 à 5,0 % massiques de radical amorceur.

11. Procédé selon l'une des revendications 1 à 10, comprenant les étapes suivantes
- immersion d'un ensemble (1) comprenant au moins deux électrodes de contact fixe à sélectivité ionique comprenant au moins deux points de mesure (6), lesquels sont respectivement sélectifs à l'encontre d'ions différents de la solution, dans une solution d'analyse,
- mesure des potentiels entre au moins deux points de mesure (6) sélectifs à l'encontre d'ions différents,
- interprétation de la mesure des potentiels.

12. Procédé selon la revendication 11, **caractérisé en ce que** les compositions chimiques d'au moins deux points de mesure (6) se différentient uniquement par un ionophore différent et/ou un sel d'échange ionique différent dans une membrane (8) extérieure à sélectivité ionique.

13. Procédé selon la revendication 11 ou 12, **caractérisé en ce qu'**il s'agit d'un procédé de titration ou d'addition standard.

14. Procédé selon l'une des revendications 11 à 13, **caractérisé en ce qu'**un point équivalent de la titration est déterminé par un enregistrement d'un changement du potentiel entre deux points de mesure (6).
